# EUROPÄISCHE PATENTSCHRIFT

(11) **EP 2 027 637 B1**
(45) Veröffentlichungstag und Bekanntmachung des Hinweises auf die Patenterteilung: **31.08.2011**
(21) Anmeldenummer: 07722464.0
(22) Anmeldetag: 18.05.2007
(51) Int. Cl.: H02J 3/00, G01R 31/00

(54) **VERFAHREN UND EINRICHTUNG ZUR BESTIMMUNG DER ELEKTRISCHEN BELASTBARKEIT VON FREILEITUNGEN MITTELS TEMPERATURMESSUNG**
METHOD AND DEVICE FOR DETERMINING THE ELECTRICAL LOADABILITY OF OVERHEAD LINES BY MEANS OF TEMPERATURE MEASUREMENT
PROCEDE ET DISPOSITIF POUR LA DETERMINATION DE LA CAPACITE ELECTRIQUE DE LIGNES AERIENNES AU MOYEN DE LA MESURE DE TEMPERATURE

(30) Priorität: 18.05.2006 DE 102006024357
(43) Veröffentlichungstag der Anmeldung: 25.02.2009
(73) Patentinhaber: Doble Lemke GmbH, 01723 Kesselsdorf (DE)
(72) Erfinder: STREHL, Thomas, 01445 Radebeul (DE)
(74) Vertreter: Kailuweit & Uhlemann Patentanwälte
(86) Internationale Anmeldenummer: PCT/DE2007/000946
(87) Internationale Veröffentlichungsnummer: WO 2007/134597

(56) Entgegenhaltungen:
- US-A- 5 140 257
- US-A- 5 933 355
- US-B1- 6 441 603

## Beschreibung

Die Erfindung betrifft Verfahren und Einrichtungen zur Bestimmung der elektrischen Belastbarkeit von Freileitungen mittels Temperaturmessung.

Durch die DE 100 38 815 A1 (Verfahren, System und Anordnung zur Stromüberlastung von Komponenten in einem Mittel- oder Hochspannungsnetz) ist ein Verfahren zur kontrollierten Stromüberlastung wenigstens einer Komponente eines Mittel- oder Hochspannungsnetzes bekannt. Dazu nimmt ein System an wenigstens einem Messort im Bereich der wenigstens einen Komponente sowie in bestimmten zeitlichen Abständen jeweils eine Messung für wenigstens eine die Strom-Überlastbarkeit beeinflussende Messgröße vor. Mit den innerhalb einer vorgegebenen Zeitdauer gewonnenen Messwerte einer Messgröße wird mit einer komponenten- sowie messgrößenspezifischen Gewichtsfunktion mittels mathematischer Faltung eine Faltungssumme gebildet und für wenigstens einen Ort im Bereich der wenigstens einen Komponente oder für die wenigstens eine Komponente insgesamt ein Neuwert für eine die Strom-Überlastbarkeit des Systems beeinflussende Messgröße auf Basis der jeweiligen Faltungssummen ermittelt. Grundlage dieses Verfahrens ist die Kenntnis einer die Strom-Überlastbarkeit direkt beeinflussenden Messgröße. Freileitungen sind aber sich ständig ändernden Umgebungsbedingungen und Energieströmen ausgesetzt. US5140257 offenbart ein Verfahren zur Bestimmung der StrombelastbarKeit von Freileitungen, wobei durch Messungen der Leitertemperatur und der Umgebungs temperatur, der Windgeschwindigkeit, der Windrichtung, der Sonneneinstrahlung und des Stromes die Belastbarkeit ermittelt wird.

Der in den Patentansprüchen 1 und 4 angegebenen Erfindung liegt die Aufgabe zugrunde, die elektrische Belastbarkeit von Freileitungen einfach zu bestimmen.

Diese Aufgabe wird mit den in den Patentansprüchen 1 und 2 aufgeführten Merkmalen gelöst.

Die Verfahren und Einrichtungen zur Bestimmung der elektrischen Belastbarkeit von Freileitungen zeichnen sich insbesondere dadurch aus, dass deren Belastbarkeit einfach sowohl momentan als auch prognostisch bestimmbar ist.

Dazu wird über wenigstens einem an der Freileitung angeordneten und mit einem Datenverarbeitungssystem verbundenen Sensor die Temperatur gemessen, die zeitabhängige Temperatur der Freileitung durch den vorhandenen oder einen gewichteten Belastungsparameter bestimmt und aus dem elektrischen Strom und der durch den Sensor gemessenen Temperatur unter Einbeziehung entweder des vorhandenen oder eines gewichteten Belastungsparameters eine zeitabhängige elektrische Belastung im Datenverarbeitungssystem ermittelt.

Eine Freileitung ist eine elektrische Leitung insbesondere zur elektrischen Energieübertragung. Als Leiter werden beispielsweise bekannte Stahl-Aluminium-Seile mit Stahlseele für die mechanische Festigkeit und Aluminiummantel für die gute Leitfähigkeit verwendet. Bei höheren Spannungen können mehrere Leiterseile als Bündelleiter montiert sein.

Die Verfahren und Einrichtungen zur Bestimmung der elektrischen Belastbarkeit von Freileitungen zeichnen sich dadurch aus, dass über die Temperatur an der Freileitung auf die Belastbarkeit der Freileitung selbst geschlossen wird. Dazu wird die Temperatur an der Freileitung gemessen und über die vorherrschenden zeitabhängigen Umgebungsbedingungen und die zeitabhängigen Erwärmungen durch die in der Freileitung fließenden elektrischen Energien auf die ebenfalls zeitabhängige Temperatur in der Freileitung als Leitertemperatur zeitabhängig geschlossen. Über die aktuellen Messungen und die aktuell vorherrschenden Umgebungsbedingungen wird auf die Belastbarkeit der Freileitung in kurzer oder langer Zukunft auf Grundlage der jeweiligen Leitertemperaturen und damit der vorherrschenden oder ermittelten elektrischen Belastung geschlossen. Dazu werden die Belastungen geschätzt und die Belastbarkeit über die Anwendung statistischer Methoden berechnet. Mögliche Belastungen der Freileitung in Abhängigkeit dieser Umgebungsbedingungen, sich vorhersagbar ändernder Umgebungsbedingungen und sich ändernder übertragener Energien werden in Abhängigkeit der berechneten Leitertemperaturen zur Ermittlung der elektrischen Belastung einbezogen. Daraus wird eine zukünftige Belastung oder zukünftige Belastungen bestimmt.

Vorteilhafterweise sind mehrere Sensoren zur Messung der Temperaturen an Freileitungen eines Netzes angeordnet. Damit kann der mögliche Energietransport im Netz bestimmt werden, so dass eine optimale Ausnutzung entsprechend der Lieferung und der Abnahme der elektrische Energie des Netzes möglich ist. Weiterhin können auch insbesondere zuschaltbare Energiequellen, die nicht stetig elektrische Energie liefern, entsprechend der vorhandenen und zukünftigen Belastungen des Netzes leichter in das Netz integriert werden. Ein weiterer Vorteil besteht darin, dass produzierte Überkapazitäten weitergeleitet, Lastschwankungen ausgeglichen und Überlastungen bestehender Freileitungen vermieden werden können.

In Freileitungsnetzen kann damit ein optimaler Energietransport eingestellt werden. Auf sich abzeichnende Engpässe bei der Abnahme elelctrischer Energie oder Überkapazitäten bei der Lieferung elektrischer Energie insbesondere unter Einbeziehung der Umgebungsbedingungen kann in den Schaltwarten leicht manuell vorausschauend reagiert werden.

Vorteilhafte Ausgestaltungen der Erfindung sind im Patentanspruch 3 angegeben.

Mit der gewichteten Temperatur der Freileitung aus dem gewichteten Belastungsparameter und einer Umgebungstemperatur unter Berücksichtigung der Grenztemperatur der Freileitung wird im Datenverarbeitungssystem nach den Weiterbildungen der Patentansprüche 2 und 5 ein Belastungsstrom für die Freileitung als Belastungsprognose der Freileitung ermittelt. Diese Belastungsprognose wird über statistische Verfahren auch über längere Zeiträume zeitabhängig berechnet. Dadurch ist eine optimale zukünftige Auslastung eines Netzes berechenbar. Zukünftige Anbieter und Abnehmer können leicht in diese Belastungsprognose mit einbezogen werden.

Aus vorliegenden Beobachtungswerten, Werten von Einzelmessungen und Einzelmessungen zuzuschreibenden Gewichten werden abgeleitete Schätzwerte für gewichtete Belastungsparameter im Datenverarbeitungssystem ermittelt. Gewichte aus Umgebungstemperaturen, Windgeschwindigkeiten, Windrichtungen, Sonnenstrahlung jeweils einzeln oder in mindestens einer Kombination bilden als gespeicherte Daten im Datenverarbeitungssystem die Grundlage zur Ermittlung der Belastungsparameter in naher und ferner Zukunft. Die Gewichte werden aus Erfahrungswerten der Vergangenheit gebildet. Im Zusammenhang mit der Prognose für die Umgebungsbedingungen kann die Prognose der Belastungsparameter der Freileitung im Datenverarbeitungssystem berechnet werden.

Nach der Weiterbildung des Patentanspruchs 3 sind an Freileitungen eines Netzes zur elektrischen Energieübertragung Sensoren zur Messung der Temperatur angeordnet und die Sensoren jeweils über einen mit dem Sensor verbundenen Sender mit einem Empfänger verbunden, wobei der Empfänger mit dem Datenverarbeitungssystem zusammengeschaltet ist. Dadurch wird über Belastungsparameter die elektrische Belastung der Freileitungen eines Netzes ermittelt, so dass eine zeitnahe oder zeitfeme Prognose der elektrischen Belastung im Datenverarbeitungssystem bestimmbar ist.

Vorteilhafterweise ist der Sensor ein akustisches Oberflächenwellenbauelement mit wenigstens einer Antenne. Weiterhin ist jeder der Sensoren über eine Steuereinrichtung mit dem Empfänger des Datenverarbeitungssystems verbunden, wobei die Steuereinrichtung sowohl eine erste Sende-/Empfangseinrichtung für elektromagnetischen Wellen als Verbindung zu dem akustischen Oberflächenwellenbauelement mit der Antenne als auch wenigstens eine zweite Sendeeinrichtung für elektromagnetische Wellen als Verbindung zu dem mit dem Datenverarbeitungssystem zusammengeschalteten Empfänger aufweist. Dadurch ist vorteilhafterweise ein passiver Sensor an der Freileitung platziert, dessen Messwerte drahtlos abgefragt werden können.

Der Sensor is an einer Klemme, einem Träger, einem Verbinder oder einer Armatur für die Freileitung angeordnet. Dadurch kann der Sensor leicht an eine bestehende oder neu zu verlegende Freileitungen angeordnet werden. Dabei ist dieser an diesem Elementen angeordnet oder ist ein Bestandteil dieser Elemente.

Ein Ausführungsbeispiel der Erfindung ist in den Zeichnungen jeweils prinzipiell dargestellt und wird im Folgenden näher beschrieben.

Es zeigen:
Fig. 1 eine Einrichtung zur Bestimmung der elektrischen Belastbarkeit einer Freileitung,
Fig. 2 die Bestimmung der elektrischen Belastung aus der ermittelten Temperatur an der Freileitung im Überblick,
Fig. 3 die Bestimmung der elektrischen Belastbarkeit einer Freileitung im Überblick und
Fig. 4 eine Armatur mit einem Sensor an einer Freileitung.

Im nachfolgenden Ausführungsbeispiel werden ein Verfahren und eine Einrichtung zur Bestimmung der elektrischen Belastbarkeit von Freileitungen 1 zusammen näher erläutert. Die Einrichtung zur Bestimmung der elektrischen Belastbarkeit einer Freileitung 1 besteht im Wesentlichen aus einem Datenverarbeitungssystem 4 und wenigstens einem damit verbundenen Sensor 7 zur Messung der Temperatur an der Freileitung 1, wobei der Sensor 7 an der Freileitung 1 angeordnet ist.

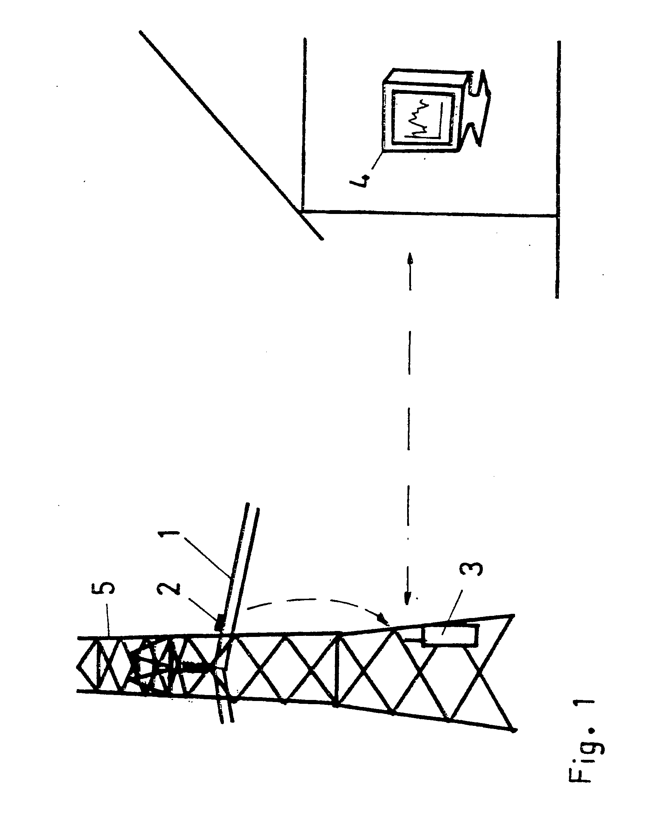

Die Fig. 1 zeigt eine Einrichtung zur Bestimmung der elektrischen Belastbarkeit einer Freileitung 1 in einer prinzipiellen Darstellung.

Der Sensor 7 zur Temperaturmessung ist an der Freileitung 1 angeordnet. Dazu befindet sich der Sensor 7 an einer Klemme, einem Träger, einem Verbinder oder einer Armatur 6 für die Freileitung 1 oder ist Bestandteil einer Klemme, einem Träger, einem Verbinder oder einer Armatur 6, wobei die Temperatur am Sensor 7 eine Grundlage zur Ermittlung der Temperatur der Freileitung 1 darstellt. Der Sensor 7 ist drahtlos mit einer Steuereinrichtung 3 verbunden oder verbindbar, so dass die Messwerte des Sensors 7 zur Steuereinrichtung 3 gelangen. Die Steuereinrichtung 3 besitzt dazu eine erste Sende-/Empfangseinrichtung für elektromagnetische Wellen als Verbindung zum Sensor 7. Über die gesendeten und empfangenen elektromagnetischen Wellen gelangen die Messwerte des Sensors 7 zur Steuereinrichtung 3. Dazu ist die Steuereinrichtung 3 vorzugsweise ein Computer wie zum Beispiel ein Mikrorechner. Zur Übermittlung der Messwerte des Sensors 7 zum Datenverarbeitungssystem 4 besitzt die Steuereinrichtung 3 eine zweite Sende-/Empfangseinrichtung für elektromagnetische Wellen. Das Datenverarbeitungssystem 4 weist eine dritte Sende-/Empfangseinrichtung für elektromagnetische Wellen auf, so dass die Steuereinrichtung 3 mit dem Datenverarbeitungssystem 4 steuerbar und die Messwerte des Sensors 7 zum Datenverarbeitungssystem 4 drahtlos übertragbar sind. Dazu ist das Datenverarbeitungssystem 4 ein bekannter Computer. Der Sensor 7 befindet sich vorteilhafterweise in Nähe eines Mastes 5 für die Freileitung 1 und die Steuereinrichtung 3 ist am Mast 5 angeordnet. Natürlich können auch mehrere Sensoren 7 mit einer Steuereinrichtung 3 drahtlos verbunden werden.

Die zeitabhängige Temperatur der Freileitung 1 ist durch vorhandene oder gewichtete Belastungsparameter bestimmt. Aus dem elektrischen Strom und der durch den Sensor 7 gemessenen Temperatur wird unter Einbeziehung entweder des vorhandenen oder eines gewichteten Belastungsparameters die zeitabhängige elektrische Belastung im Datenverarbeitungssystem 4 ermittelt. Die Temperatur und die geometrischen und materiellen Eigenschaften der Freileitung 1 bestimmen deren elektrischen Widerstand und die Belastbarkeit der Freileitung 1 selbst.

Zur Anwendung kommen Verfahren der technischen Statistik als Zusammenfassung aller Methoden der Statistik, die in der Technik verwendbar sind oder dafür zugeschnitten werden. Dabei handelt es sich unter anderem um statistische Prüfverfahren und um Regression und Korrelationsanalysen zur Aufdeckung und Beschreibung von Zusammenhängen. Grundlage ist eine Versuchsplanung. Aus vorliegenden Beobachtungswerten, Werten von Einzelmessungen und Einzelmessungen zuzuschreibenden Gewichten werden Schätzwerte für gewichtete Belastungsparameter im Datenverarbeitungssystem 4 abgeleitet, so dass aktuelle und zukünftige Belastungsparameter die Grundlagen der in der Freileitung 1 vorhandenen Temperaturen bilden. Dadurch sind Temperaturen der Freileitung 1 in Abhängigkeit der gewichteten Belastungsparameter im Datenverarbeitungssystem 4 und daraus folgernd deren Belastung ermittelbar.

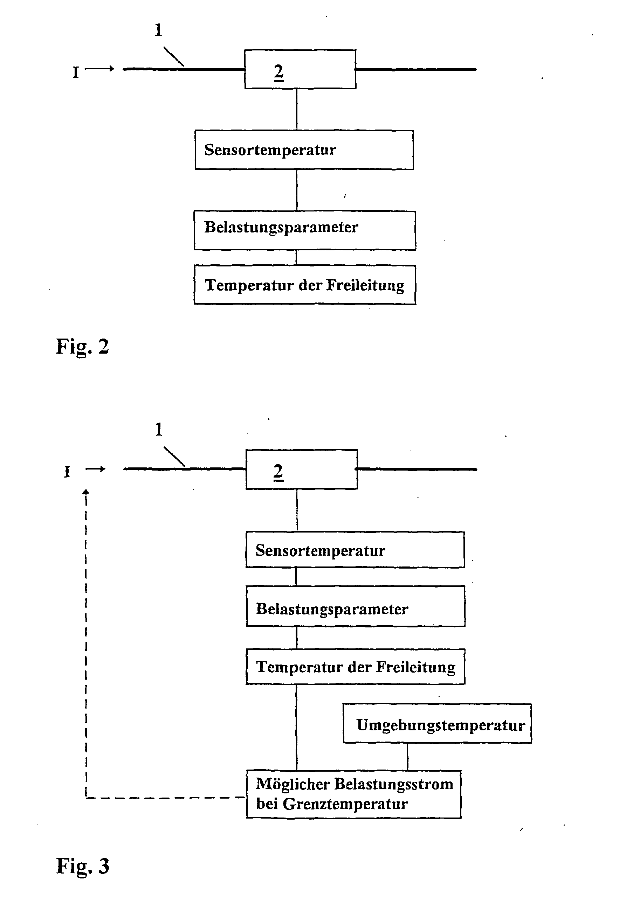

Die Fig. 2 zeigt die Bestimmung der elektrischen Belastung aus der ermittelten Temperatur an der Freileitung 1 im Überblick.

Grundlage der gewichteten Belastungsparameter sind die Gewichte aus Umgebungstemperaturen, Windgeschwindigkeiten, Windrichtungen, Sonnenstrahlung jeweils einzeln oder in mindestens einer Kombination, die im Datenverarbeitungssystem 4 gespeichert sind.

Mit der gewichteten Temperatur der Freileitung 1 wird aus dem gewichteten Belastungsparameter und einer Umgebungstemperatur unter Berücksichtigung der Grenztemperatur der Freileitung 1 im Datenverarbeitungssystem 4 ein möglicher Belastungsstrom für die Freileitung 1 als Belastungsprognose der Freileitung 1 ermittelt. Grundlage der gewichteten Temperatur der Freileitung 1 ist die Temperatur des Sensors 7 und die Belastungsparameter der Freileitung 1.

Die Fig. 3 zeigt die Bestimmung der elektrischen Belastbarkeit einer Freileitung 1 im Überblick.

Zur Anwendung kommen wiederum Verfahren der technischen Statistik als Zusammenfassung aller Methoden der Statistik, die in der Technik verwendbar sind oder dafür zugeschnitten werden. Dabei handelt es sich unter anderem um statistische Prüfverfahren und um Regressions- und Korrelationsanalysen zur Aufdeckung und Beschreibung von Zusammenhängen. Grundlage ist eine Versuchsplanung. Aus vorliegenden Beobachtungswerten, Werten von Einzelmessungen und Einzelmessungen zuzuschreibenden Gewichten abgeleitete Schätzwerte werden gewichtete Belastungsparameter im Datenverarbeitungssystem 4 ermittelt. Die Gewichte sind aus Umgebungstemperaturen, Windgeschwindigkeiten, Windrichtungen, Sonnenstrahlung jeweils einzeln oder in mindestens einer Kombination im Datenverarbeitungssystem 4 gespeichert.

Der Sensor 7 zur Temperaturmessung ist ein bekanntes akustisches Oberflächenwellenbauelement mit wenigstens einer Antenne 8. Der Sensor 7 ist bekannterweise ein Bauelement aus einem piezoelektrischen Substrat, auf dem ein eingangs- und ausgangsseitiger elektrischer Wandler mit fingerförmiger Struktur aufgebracht ist. Auf Grund der Piezoelektrizität wird elektrische in akustische Energie und umgekehrt umgewandelt. Das Laufzeitverhalten der akustischen Energie wird zur Temperaturmessung angewandt. Natürlich können auch andere bekannte Sensoren zur Temperaturmessung eingesetzt werden.

Der Sensor 7 selbst ist an einer Armatur 6 für die Freileitung 1 angeordnet. Die Armatur 6 ist ein Körper, der mit der Freileitung 1 verbunden ist.

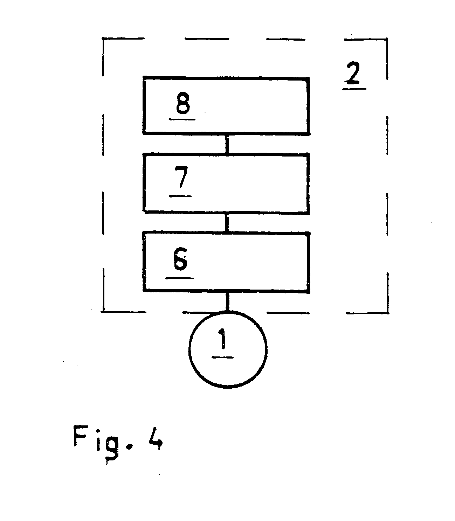

Die Fig. 4 zeigt eine Armatur 6 mit einem Sensor 7 an einer Freileitung 1 in einer prinzipiellen Darstellung.

## Patentansprüche

1. Verfahren zur Bestimmung der elektrischen Belastbarkeit von Freileitungen mittels Temperaturmessung, wobei aus vorliegenden Beobachtungswerten, Werten von Einzelmessungen und Einzelmessungen zuzuschreibenden Gewichtungen abgeleitete Schätzwerte für gewichtete Belastungsparameter im Datenverarbeitungssystem (4) ermittelt werden, wobei Gewichtungen aus Umgebungstemperaturen, Windgeschwindigkeiten, Windrichtungen, Sonnenstrahlung jeweils einzeln oder in mindestens einer Kombination im Datenverarbeitungssystem (4) gespeichert sind **dadurch gekennzeichnet, dass** die Temperatur an wenigstens einem Sensor (7) an oder als Bestandteil einer Klemme, einem Träger, einem Verbinder oder einer Armatur für die Freileitung mit einem Datenverarbeitungssystem (4) gemessen wird, und dass aus den gemessenen Temperaturen des Sensors (7) und den elektrischen Strömen der Freileitung (1) unter Einbeziehung der gewichteten Belastungsparameter eine zeitabhängige elektrische Belastung im Datenverarbeitungssystem (4) ermittelt wird, wobei mit den gewichteten Leitertemperaturen aus den gewichteten Belastungsparametern und Umgebungstemperaturen unter Berücksichtigung der Grenztemperatur der Freileitung (1) Belastungsströme für die Freileitung (1) als Belastungsprognose der Freileitung (1) im Datenverarbeitungssystem (4) ermittelt werden.

2. Einrichtung zur Bestimmung der elektrischen Belastbarkeit von Freileitungen mit den folgenden Merkmalen: einem Temperatursensor (7) , einem mit dem Temperatursensor (7) verbundenem Datenverarbeitungssystem (4), wobei das Datenverarbeitungssystem zum Einen ein aus vorliegenden Beobachtungswerten, Werten von Einzelmessungen und Einzelmessungen zuzuschreibenden Gewichtung abgeleitete Schätzwerte für gewichtete Belastungsparameter ermittelndes Datenverarbeitungssystem (4) ist, so dass Gewichtungen aus Umgebungstemperaturen, Windgeschwindigkeiten, Windrichtungen, Sonnenstrahlung jeweils einzeln oder in mindestens einer Kombination im Datenverarbeitungssystem (4) gespeichert sind **dadurch gekennzeichnet, dass** der Temperatursensor (7) entweder an oder als ein Bestandteil einer- Klemme, einem Träger, einem Verbinder oder einer Armatur (6) für die Freileitung ist (1), und dass das Datenverarbeitungssystem zum Anderen ein aus den gemessenen Temperaturen des Temperatursensors (7) und den elektrischen Strömen der Freileitung (1) und unter Einbeziehung der gewichteten Belastungsparameter eine zeitabhängige elektrische Belastung ermittelndes Datenverarbeitungssystem (4) ist, so dass mit den gewichteten Temperaturen des Leiterseils aus den gewichteten Belastungsparametern und Umgebungstemperaturen unter Berücksichtigung der Grenztemperatur der Freileitung (1) Belastungsströme als Belastungsprognose der Freileitung (1) im Datenverarbeitungssystem (4) ermittelt werden.

3. Einrichtung nach Patentanspruch 2, **dadurch gekennzeichnet, dass** an Freileitungen (1) eines Netzes zur elektrischen Energieübertragung Sensoren (7) zur Messung der Temperatur angeordnet sind und dass die Sensoren (7) jeweils über einen mit dem Sensor (7) verbundenen Sender mit einem Empfänger verbunden sind, wobei der Empfänger mit dem Datenverarbeitungssystem (4) zusammengeschaltet ist.

## Claims

1. Method for determining the electrical loadability of overhead lines through temperature measurement, wherein estimated values for weighted load parameters are determined in the data processing system (4), the estimated values being derived from available observed values, values of individual measurements and weightings to be attributed to individual measurements, wherein weightings from environment temperatures, wind speeds, wind directions, solar radiation each are stored individually or in at least one combination in the data processing system (4), **characterized by** that the temperature is measured at at least one sensor (7) at or as part of a terminal, a structural member, a connector or a fixture for the overhead line using a data processing system (4) and that from the temperatures measured by the sensor (7) and the electric currents of the overhead line (1) including the weighted load parameters a time-dependent electrical load is determined in the data processing system (4), wherein using the weighted line temperatures load currents for the overhead line (1) are determined in the data processing system (4) from the weighted load parameters and environment temperatures considering the limiting temperature of the overhead line (1) as load prediction of the overhead line (1).

2. Device for determining the electrical loadability of overhead lines with the following features: a temperature sensor (7), a data processing system (4) connected to the temperature sensor (7), wherein the data processing system, first, is a data processing system (4) that determines estimated values for weighted load parameters deriving the estimated values from available observed values, values of individual measurements and weightings to be attributed to individual measurements so that weightings from environment temperatures, wind speeds, wind directions, solar radiation each are stored individually or in at least one combination in the data processing system (4) **characterized by** that the temperature sensor (7) is arranged either at or as part of a terminal, a structural member, a connector or a fixture (6) for the overhead line (1), and the data processing system (4), second, is a data processing system (4) that determines a time-dependent electrical load from the temperatures measured by the temperature sensor (7) and the electric currents of the overhead line (1) including the weighted load parameters so that with the weighted temperatures of the overhead power transmission conductor from the weighted load parameters and environment temperatures considering the limiting temperature of the overhead line (1) load currents as a load prediction of the overhead line (1) are determined in the data processing system (4).

3. Device according to claim 2 **characterized by** that at overhead lines (1) of an electrical energy transmission system sensors (7) for measuring the temperature are arranged and the sensors (7) each are connected to a receiver over a transmitter that is connected to the sensor (7), wherein the receiver is coupled to the data processing system (4).

## Revendications

1. Procédé de détermination de la capacité de charge électrique de lignes aériennes au moyen d'une mesure de température, dans lequel des valeurs estimatives de paramètres de charge pondérés dérivées de valeurs d'observation existantes, de valeurs de mesures individuelles et de pondérations à attribuer à des mesures individuelles sont déterminées dans le système de traitement de données (4), des pondérations issues de températures ambiantes, de vitesses du vent, de directions du vent, du rayonnement solaire étant enregistrées chaque fois séparément ou en au moins une combinaison dans le système de traitement de données (4), **caractérisé en ce que** la température est mesurée avec un système de traitement de données (4) sur au moins un capteur (7) rapporté ou intégré à un serre-fils, un support, un connecteur ou un accessoire pour la ligne aérienne et qu'une charge électrique dépendante du temps est déterminée dans le système de traitement de données (4) à partir des températures mesurées par le capteur (7) et des courants électriques de la ligne aérienne (1) en tenant compte des paramètres de charge pondérés, des courants de charge pour la ligne aérienne (1) étant déterminés dans le système de traitement de données (4) en tant que charge prévisionnelle de la ligne aérienne (1) avec les températures de conducteur pondérées à partir des paramètres de charge pondérés et des températures ambiantes en tenant compte de la température limite de la ligne aérienne (1).

2. Dispositif de détermination de la capacité de charge électrique de lignes aériennes, possédant les caractéristiques suivantes : un capteur de température (7), un système de traitement de données (4) relié au capteur de température (7), le système de traitement de données (4) étant, d'une part, un système de traitement de données (4) qui détermine des valeurs estimatives de paramètres de charge pondérés dérivées de valeurs d'observation existantes, de valeurs de mesures individuelles et de pondérations à attribuer à des mesures individuelles, de sorte que des pondérations issues de températures ambiantes, de vitesses du vent, de directions du vent, du rayonnement solaire sont enregistrées chaque fois séparément ou en au moins une combinaison dans le système de traitement de données (4), **caractérisé en ce que** le capteur de température (7) est soit rapporté, soit intégré à un serre-fils, un support, un connecteur ou un accessoire (6) pour la ligne aérienne (1) et que le système de traitement de données est, d'autre part, un système de traitement de données (4) qui détermine une charge électrique dépendante du temps à partir des températures mesurées par le capteur de température (7) et des courants électriques de la ligne aérienne (1) en tenant compte des paramètres de charge pondérés, de sorte qu'avec les températures pondérées du câble conducteur, des courants de charge sont déterminés dans le système de traitement de données (4) en tant que charge prévisionnelle de la ligne aérienne (1) à partir des paramètres de charge pondérés et des températures ambiantes en tenant compte de la température limite de la ligne aérienne (1).

3. Dispositif selon la revendication 2, **caractérisé en ce que** des capteurs (7) pour la mesure de la température sont disposés sur des lignes aériennes (1) d'un réseau de transport d'énergie électrique et que les capteurs (7) sont reliés chacun par un émetteur relié au capteur (7) à un récepteur, le récepteur étant interconnecté avec le système de traitement de données (4).
